# EUROPEAN PATENT APPLICATION

(11) **EP 4 583 376 A1**
(43) Date of publication of application: **09.07.2025**
(21) Application number: 24215706.3
(22) Date of filing: 27.11.2024
(51) Int. Cl.: H02K 5/20, H02K 9/19

(54) **MOTOR UNIT**

(30) Priority: 04.01.2024 JP 2024000248
(71) Applicant: TOYOTA JIDOSHA KABUSHIKI KAISHA, Aichi-ken, 471-8571 (JP)
(72) Inventor: MAKIDO, Yasuhiro, Toyota-shi, 471-8571 (JP)
(74) Representative: TBK

(57) **Abstract**

A motor unit (1) includes a motor (2), a housing (30) that houses the motor (2), and a coolant channel (40). The coolant channel (40) includes an inlet passage (41), a branching passage (42) that is connected to the inlet passage (41) and into which a coolant flows from the inlet passage (41), a first channel (43) that is connected to the branching passage (42), and a second channel (44) that is connected to the branching passage (42) and also of which a path length is shorter than that of the first channel (43). The first channel (43) and the second channel (44) are each structured such that a plurality of straight portions is connected in series by a plurality of bent portions, and a cross-sectional area of the straight portions of the first channel (43) is larger than a cross-sectional area of the straight portions of the second channel (44).

## Description

### BACKGROUND OF THE INVENTION

### 1. Field of the Invention

The technology disclosed in the present specification relates to a motor unit.

### 2. Description of Related Art

WO2023/074571 discloses a motor unit including two systems of coolant paths, which are a first channel and a second channel.

### SUMMARY OF THE INVENTION

When there is a difference in path length between the first channel and the second channel, a difference is generated in amount of pressure loss between the two channels. As a result, there are cases in which balance in flow rate between the two channels is lost, and an undesirable difference in cooling capacity occurs between the two channels.

An aspect of the present technology is a motor unit. The motor unit includes a motor, a housing that houses the motor, and a coolant channel that is provided in a wall face of the housing and that is configured such that a coolant flows through. The coolant channel includes an inlet passage for receiving the coolant from outside, a branching passage that is connected to the inlet passage and into which the coolant flows from the inlet passage, a first channel that is connected to the branching passage and into which the coolant flows from the branching passage, a second channel that is connected to the branching passage, into which the coolant flows from the branching passage, and also of which a path length is shorter than that of the first channel. The first channel and the second channel are each structured such that a plurality of straight portions is connected in series by a plurality of bent portions, and a cross-sectional area of the straight portions of the first channel is larger than a cross-sectional area of the straight portions of the second channel.

According to the above configuration, the first channel has a longer path length than the second channel. The cross-sectional area of the straight portion of the first channel is made to be larger than the cross-sectional area of the straight portion of the second channel. Accordingly, pressure loss can be reduced in the first flow passage, as compared to when the cross-sectional area of the straight portion of the first channel is equal to the cross-sectional area of the straight portion of the second channel. Flow rate distribution of the coolant can then be adjusted such that the flow rate of the coolant flowing into the first channel increases the more the pressure loss in the first channel decreases. Balance of cooling capabilities can be appropriately set between the first channel and the second channel.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view of a motor unit;
FIG. 2 is a plan view of a body portion;
FIG. 3 is a plan view of a first cover;
FIG. 4 is a development view of a coolant channel;
FIG. 5 is an enlarged view of an enlarged region in FIG. 2;
FIG. 6 is an enlarged view of a region in a vicinity of a branching passage in a second embodiment; and
FIG. 7 is an enlarged view of a region in a vicinity of a branching passage in a modification.

### DETAILED DESCRIPTION OF EMBODIMENTS

According to a second aspect, in the first aspect, the straight portions of the first channel and the straight portions of the second channel may extend in a direction parallel to a rotary shaft of the motor.

According to a third aspect, in the first aspect, the coolant channel may include a discharge port for discharging the coolant from the first channel and the second channel. When viewed from a direction of a rotary shaft of the motor, a position of the inlet passage and a position of the discharge port may be different in a circumferential direction of the housing. The first channel may be provided in a first region in the circumferential direction of the housing, the first region extending from the inlet passage toward one side in the circumferential direction to the discharge port. The second channel may be provided in a second region in the circumferential direction of the housing, the second region extending from the inlet passage toward another side in the circumferential direction to the discharge port.

According to the above configuration, the circumferential direction of the housing can be divided into the first region and the second region. The first region can then be cooled by the first channel, and the second region can be cooled by the second channel.

According to a fourth aspect, in the first aspect, the housing may include a body portion with a cylindrical shape about a rotary shaft of the motor, a first cover that closes off a first end face of the body portion on one side of the rotary shaft, and a second cover that closes off a second end face of the body portion on another side of the rotary shaft. The straight portions of the first channel and the straight portions of the second channel may be fashioned in the body portion. The bent portions of the first channel and the bent portions of the second channel may be fashioned in the first cover and in the second cover.

According to the above configuration, closing both end faces of the body portion with the first cover and the second cover enables a structure to be realized in which the straight portions are connected in series by the bent portions.

According to a fifth aspect, in the above fourth aspect, the body portion may be a cast article.

According to a sixth aspect, in the first aspect, a cross-sectional area of the bent portions of the first channel may be equal to a cross-sectional area of the bent portions of the second channel.

According to the above configuration, the shape of the inner face of the bent portions can be made in common between the first channel and the second channel. This enables processing of the bent portions to be simplified and ease of assembling the first cover and the second cover to be improved.

### First Embodiment

### Configuration of Motor Unit 1

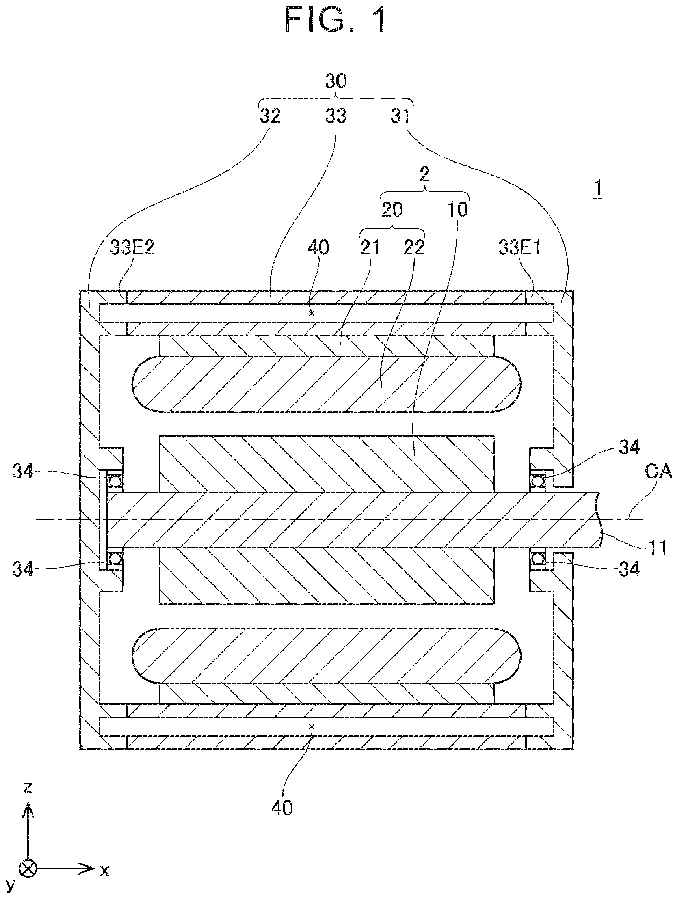

FIG. 1 is a schematic sectional view of a motor unit 1 according to an first embodiment. Note that in FIG. 1, a z-axis direction is a vertical direction, and an x-axis direction and a y-axis direction are horizontal directions. Also, the x-axis direction is a direction in which a rotary shaft 11 extends. Coordinate relations are the same in subsequent drawings.

The motor unit 1 is installed in an electrified vehicle. Examples of the electrified vehicle include a hybrid electric vehicle and a battery electric vehicle. In the electrified vehicle, a motor 2 may be used as a traction motor that generates motive power for causing the vehicle to travel, or may be used as a generator that generates electric power using regenerative braking force and excess engine power. In the electrified vehicle, the motor unit 1 is installed such that a negative direction of the z-axis matches the direction of gravity.

The motor unit 1 primarily includes a motor 2, a housing 30, and a coolant channel 40. Coolant in the present embodiment is, for example, water. The motor 2 primarily includes a rotor 10 and a stator 20. The rotor 10 has the rotary shaft 11. The rotor 10 is fixed to the rotary shaft 11. The stator 20 has a stator core 21 and a coil 22. The stator core 21 is a substantially annular member made of laminated steel plates or the like. The stator core 21 also includes a central axis CA. The central axis CA of the stator core 21 is common with a central axis of the rotary shaft 11. The stator core 21 has a cylindrical shape centered on the central axis CA.

The housing 30 is a member that houses the rotor 10 and the stator 20. The housing 30 includes a first cover 31, a second cover 32, and a body portion 33. The body portion 33 has a cylindrical shape about the rotary shaft 11 of the motor 2. The central axis CA of the housing 30 is common with the central axis of the rotary shaft 11. The manufacturing method and material of the body portion 33 can be selected as appropriate. In the present embodiment, the body portion 33 is a cast article. The first cover 31 closes a first end face 33E1 of the body portion 33 on one side (+x direction side) of the rotary shaft 11. The second cover 32 closes a second end face 33E2 of the body portion 33 on the other side (-x direction side) of the rotary shaft 11. The rotary shaft 11 is supported by the housing 30 via bearings 34, and is rotatable.

### Configuration of Coolant Channel 40

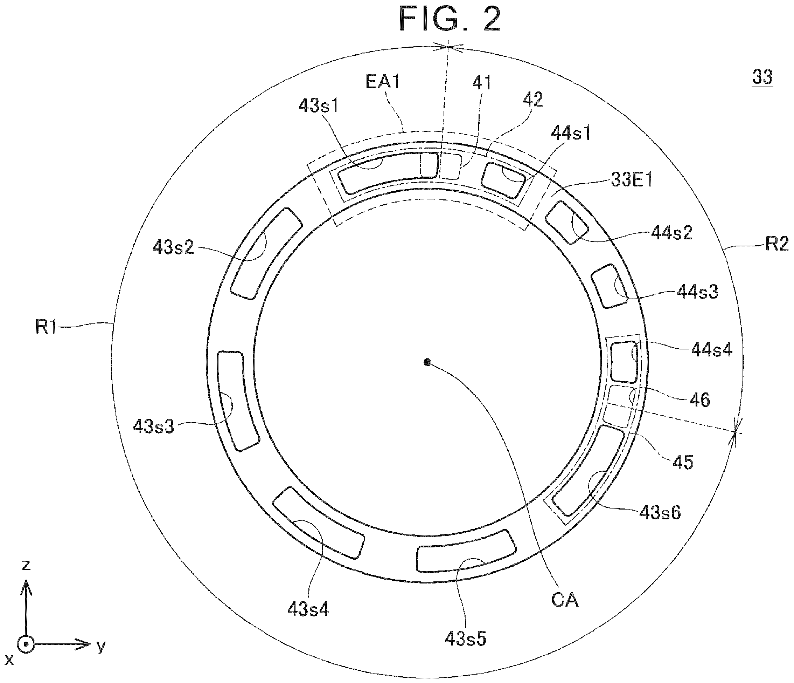

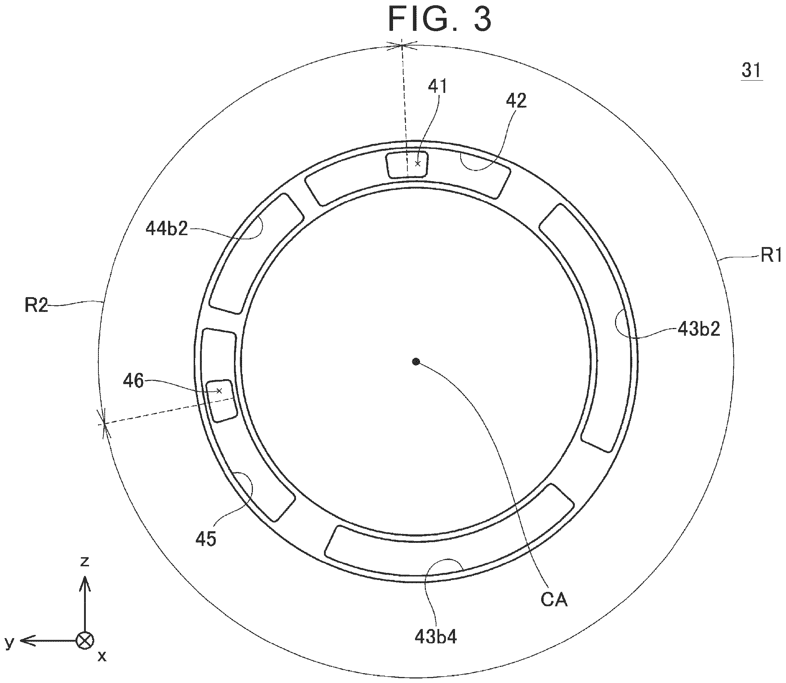

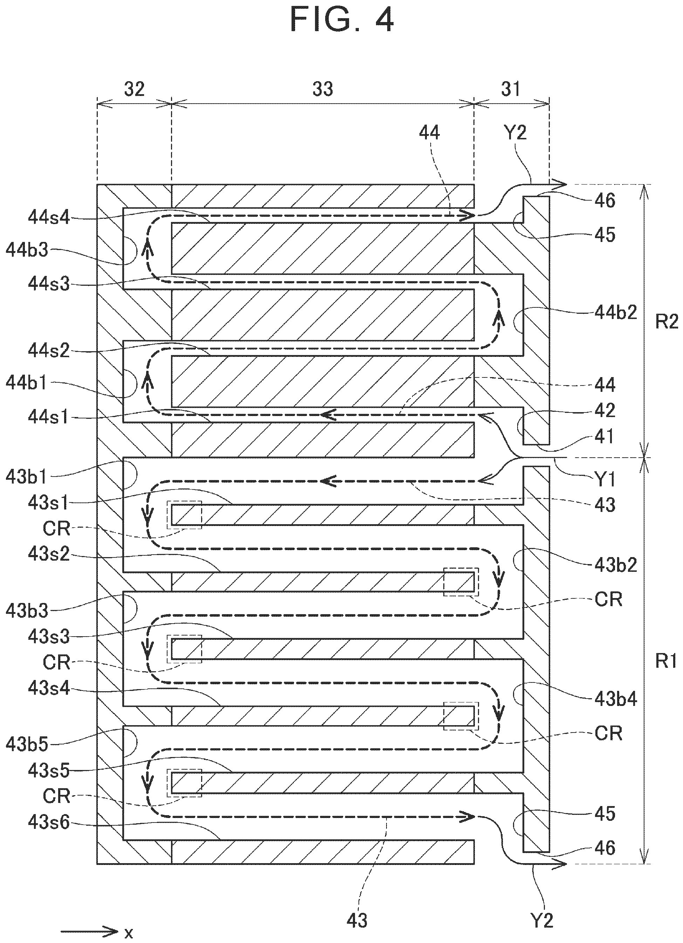

The coolant channel 40 will be described with reference to FIGS. 2 to 5. The coolant channel 40 is provided in a wall face of the housing 30, and is a channel configured such that coolant flows therethrough. FIG. 2 is a plan view of the first end face 33E1 of the body portion 33 as viewed from the +x direction side. Note that in FIG. 2, positions of an inlet passage 41, a branching passage 42, a merging passage 45, and an discharge port 46 are indicated by long dashed short dashed lines to facilitate understanding. FIG. 3 is a plan view of a joining face of the first cover 31 as viewed from the -x direction side. FIG. 4 is a development view of the coolant channel 40. Note that FIG. 4 is a schematic diagram, and there are portions therein that differ from the actual dimensions.

The coolant channel 40 includes the inlet passage 41, the branching passage 42, a first channel 43, a second channel 44, the merging passage 45, and the discharge port 46. The inlet passage 41, the branching passage 42, the merging passage 45, and the discharge port 46 are formed in the first cover 31. The inlet passage 41 is a channel that receives coolant from outside. The inlet passage 41 is connected to the branching passage 42. The coolant flows into the branching passage 42 from the inlet passage 41. The first channel 43 and the second channel 44 are connected to the branching passage 42 (see dotted arrows in FIG. 4). The coolant flows from the branching passage 42 into the first channel 43 and the second channel 44 (see arrow Y1 in FIG. 4). Outlets of the first channel 43 and the second channel 44 are connected to the merging passage 45, and the discharge port 46 is also connected to the merging passage 45. The coolant flows from the first channel 43 and the second channel 44 into the merging passage 45 (see arrow Y2 in FIG. 4). The coolant that has flowed into the merging passage 45 is discharged to the outside through the discharge port 46.

The first channel 43 includes straight portions 43s1 to 43s6 and bent portions 43b1 to 43b5. The straight portions 43s1 to 43s6 are formed in the body portion 33, and extend parallel to one another in a direction parallel to the rotary shaft 11 (the x-axis direction). End portions of the straight portions 43s1 to 43s6 in the ±x-directions are connected by the bent portions 43b 1 to 43b5. The bent portions 43b2 and 43b4 connecting the end portions thereof on the +x direction side have a groove shape formed in the first cover 31. The bent portions 43b1, 43b3, and 43b5 connecting the end portions thereof on the -x direction side have a groove shape formed in the second cover 32. Fixing the first cover 31 and the second cover 32 to the body portion 33 by fastening members, which are omitted from illustration, forms the first channel 43, which is a series of traversable paths (see dotted arrows in FIG. 4).

In the same way, the second channel 44 includes straight portions 44s1 to 44s4 and bent portions 44b1 to 44b3. The straight portions 44s1 to 44s4 are formed in the body portion 33, and extend parallel to one another in a direction parallel to the rotary shaft 11 (the x-axis direction). Ends portions of the straight portions 44s1 to 44s4 in the ±x-directions are connected by the bent portions 44b1 to 44b3. The bent portion 44b2 connecting the end portions thereof on the +x direction side have a groove shape formed in the first cover 31. The bent portions 44b1 and 44b3 connecting the end portions thereof on the -x direction side have a groove shape formed in the second cover 32. Fixing the first cover 31 and the second cover 32 to the body portion 33 by fastening members, which are omitted from illustration, forms the second channel 44, which is a series of traversable paths (see dotted arrows in FIG. 4).

The cross-sectional area of the straight portions 43s1 to 43s6 of the first channels 43 is larger than the cross-sectional area of the straight portions 44s1 to 44s4 of the second channel 44. Further, the grooves forming the bent portions 43b1 to 43b5 of the first channel 43 and the grooves forming the bent portions 44b1 to 44b3 of the second channel 44 all have the same shape. Accordingly, the cross-sectional areas of the bent portions 43b1 to 43b5 and the cross-sectional areas of the bent portions 44b1 to 44b3 are all equal to each other.

As illustrated in FIG. 2, when viewed from the direction of the rotary shaft (x direction), a position of the inlet passage 41 and a position of the discharge port 46 are different in a circumferential direction of the housing 30. Now, a first region R1 and a second region R2 will be defined. The first region R1 is a region extending in the circumferential direction of the housing 30, from the inlet passage 41 toward one side in the circumferential direction (counterclockwise side in FIG. 2 ) to the discharge port 46. The second region R2 is a region extending in the circumferential direction of the housing 30, from the inlet passage 41 toward the other side in the circumferential direction (clockwise side in FIG. 2 ) to the discharge port 46. The first channel 43 is provided in the first region R1. The second channel 44 is provided in the second region R2. The second region R2 is smaller than the first region R1. Also, the second channel 44 has a shorter path length than the first channel 43.

### Structure of Branching Passage 42

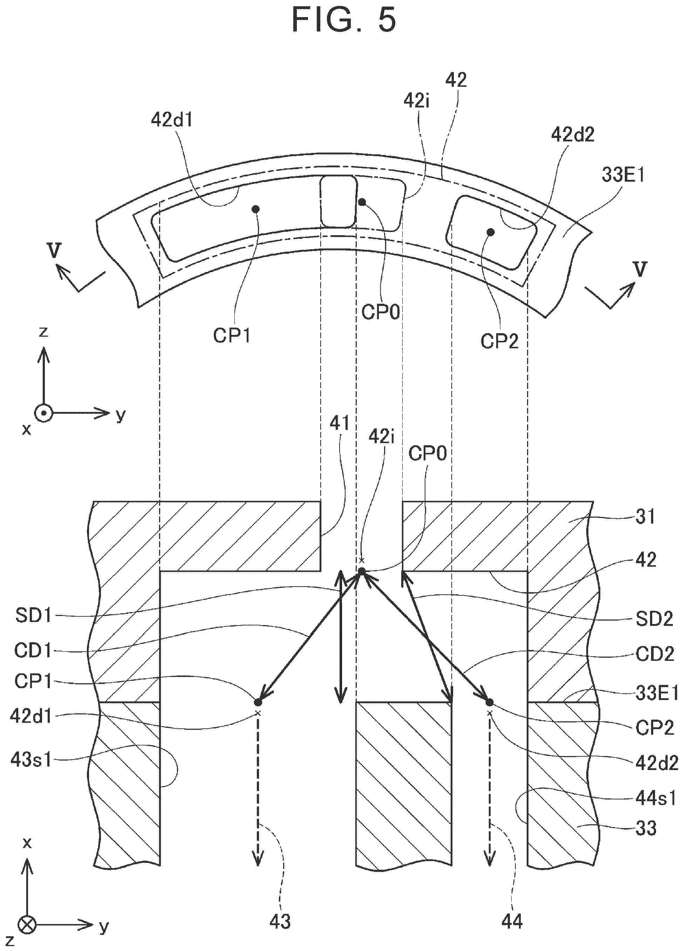

FIG. 5 illustrates an enlarged view of an enlarged region EA1 in FIG. 2. The enlarged region EA1 is a region in a vicinity of the branching passage 42. The upper part of FIG. 5 is a plan view as seen from the x direction side. Note that in the plan view at the upper part of FIG. 5, positions of the branching passage 42 and an inlet port 42i are indicated by long dashed short dashed lines. The lower part of FIG. 5 is a cross-sectional view taken along line V-V in the plan view in the upper part of FIG. 5.

The inlet port 42i, a first outlet port 42d1, and a second outlet port 42d2 are defined on an inner face of the branching passage 42. The inlet port 42i is an opening portion through which the coolant flows from the inlet passage 41. The first outlet port 42d1 is an opening portion through which the coolant flows out to the straight portion 43s1, which is an entrance of the first channel 43. The second outlet port 42d2 is an opening portion through which the coolant flows out to the straight portion 44s1, which is an entrance of the second channel 44. The area of the first outlet port 4 2d 1 is greater than the area of the second outlet port 42d2. The first outlet port 42d1 and the second outlet port 42d2 are disposed in a state adjacent to each other on the first end face 33E1 of the body portion 33. The inlet port 42i of the branching passage 42 is disposed in the first cover 31, in a state facing the first outlet port 42d1 and the second outlet port 42d2.

The first outlet port 42d1 is an overlapping region between an opening region of the straight portion 43s1 and an opening region of the branching passage 42 as viewed from the x-axis direction. The second outlet port 42d2 is an overlapping region between an opening region of the straight portion 44s1 and the opening region of the branching passage 42 as viewed from the x-axis direction. In the example of the plan view at the upper part of FIG. 5, the entire opening region of the straight portion 43s1 and the entire opening region of the straight portion 44s1 are included in the opening region of the branching passage 42. Accordingly, the opening region of the straight portion 43s1 corresponds to the first outlet port 42d1, and the opening region of the straight portion 44s1 corresponds to the second outlet port 42d2.

A center CP0 of the inlet port 42i, a center CP1 of the first outlet port 42d1, and a center CP2 of the second outlet port 42d2, will now be considered, as viewed from the direction of the rotary shaft 11 (x direction) as illustrated in the plan view at the upper part of FIG. 5. As illustrated in the cross-sectional view at the lower part of FIG. 5, a distance CD1 between the center CP0 and the center CP1 is smaller than a distance CD2 between the center CP0 and the center CP2.

Also, a shortest distance SD1 from the inlet port 42i to the first outlet port 42d1 and a shortest distance SD2 from the inlet port 42i to the second outlet port 42d2 will be considered, as illustrated in the cross-sectional view at the lower part of FIG. 5. The shortest distance SD1 is smaller than the shortest distance SD2. Note that the shortest distance is the shortest distance on the path through which the coolant flows. For example, when an imaginary straight line is drawn from the inlet port 42i to the first outlet port 42d1, the minimum length of the imaginary straight line corresponds to the shortest distance SD1.

### Effects

Issues will be described. When there is a difference in path length between the first channel 43 and the second channel 44, a difference is generated in the amount of pressure loss between the two channels. As a result, an undesirable difference in cooling capacity between the two channels may occur, and the motor 2 may not be cooled uniformly. Furthermore, pumping capacity of the coolant needs to be increased to match the channel with the greater pressure loss, and accordingly there are cases in which a pumping pump (omitted from illustration) becomes unnecessarily large in size. Therefore, in the technology of the present specification, the cross-sectional area of the straight portions 43s1 to 43s6 of the first channel 43 is made to be greater than the cross-sectional area of the straight portions 44s1 to 43s4 of the second channel 44. This enables the amount of pressure loss in the first channel 43 to be reduced as compared to when the cross-sectional area of the straight portions 43s1 to 43s6 is equal to the cross-sectional area of the straight portions 44s1 to 43s4. Accordingly, the flow rate of the coolant flowing into the first channel 43 can be made to be greater than the flow rate of the coolant flowing into the second channel 44. As a result, flow rate distribution of the coolant can be adjusted such that the flow rate of the coolant in the first channel 43 becomes greater. Balance of the cooling capacity can be appropriately set between the first channel 43 and the second channel 44, and accordingly the motor 2 can be uniformly cooled. Also, the difference in the amount of pressure loss between the first channel 43 and the second channel 44 can be reduced, and thus the pumping pump can be suppressed from becoming unnecessarily large.

For example, a case will be considered in which the amount of pressure loss in the first channel 43 having a longer channel length is reduced by increasing the cross-sectional area of the bent portion. In this case, as illustrated in FIG. 4, a technique is conceivable in which a plurality of regions CR, situated on end faces of partition walls separating the straight portions, is removed by cutting. However, this increases the number of man-hours, and also leads to decrease in yield as to base material. On the other hand, in the technology according to the present specification, the amount of pressure loss in the first channel 43 can be reduced by setting a magnitude relation between the cross-sectional area of the straight portions 43s1 to 43s6 and the cross-sectional area of the straight portions 44s1 to 43s4 as appropriate. Additional processes such as cutting the partition walls and so forth are not required, manufacturing costs can be reduced and yield can be improved.

In the technology according to the present specification, the cross-sectional area of the straight portions 43s1 to 43s6 of the first channel 43 is made to be greater than the cross-sectional area of the straight portions 44s1 to 43s4 of the second channel 44. This enables layout density of the first channels 43 to be reduced as compared to layout density of the second channels 44, while maintaining the area ratio of the channels to an outer periphery of the housing 30 to be equal between the first channel 43 and the second channel 44. As a result, the number of straight portions of the first channel 43 can be reduced, and accordingly the number of times of directional reversal (i.e., the number of bent portions) can be reduced. This enables resistance of the bent piping in the first channel 43 to be reduced, and hence reduces the amount of pressure loss in the first channel 43.

### First Modification of First Embodiment

The positional relation and area relation among the inlet port 42i, the first outlet port 42d1, and the second outlet port 42d2 can be changed in various ways. For example, in FIG. 5, the area of the first outlet port 42d1 and the area of the second outlet port 42d2 may be equal to each other. In this embodiment as well, having the relation in which the distance CD1 is smaller than the distance CD2 and the relation in which the shortest distance SD1 is smaller than the shortest distance SD2 enables the flow rate distribution of the coolant to be adjusted such that the coolant flow rate in the first channel 43 is further increased.

### Second Modification of First Embodiment

The cross-sectional areas of the straight portions 43s1 to 43s6 of the first channel 43 are not limited to all being the same, and can be changed in various ways. For example, the straight portion 43s6 closer to the discharge port 46 may have a larger cross-sectional area than the straight portion 43s1 closer to the inlet passage 41. Also, the cross-sectional area may be gradually increased from the straight portion 43s1 to the straight portion 43s6. The effects will now be described. The closer the coolant is to the discharge port 46, the longer heat absorption time becomes, and the higher the temperature becomes, and accordingly the cooling capacity becomes lower. Now, increasing the cross-sectional area of the straight portion close to the discharge port 46 enables coolant flow velocity in the straight portion close to the discharge port 46 to be made lower than coolant flow velocity in the straight portion close to the inlet passage 41. The standing time of the coolant in the straight portion close to the discharge port 46 can be increased, and accordingly the cooling capacity in the straight portion close to the discharge port 46 can be increased. Thus, the difference in cooling capacity between the straight portion close to the discharge port 46 and the straight portion close to the inlet passage 41 can be suppressed.

### Second Embodiment

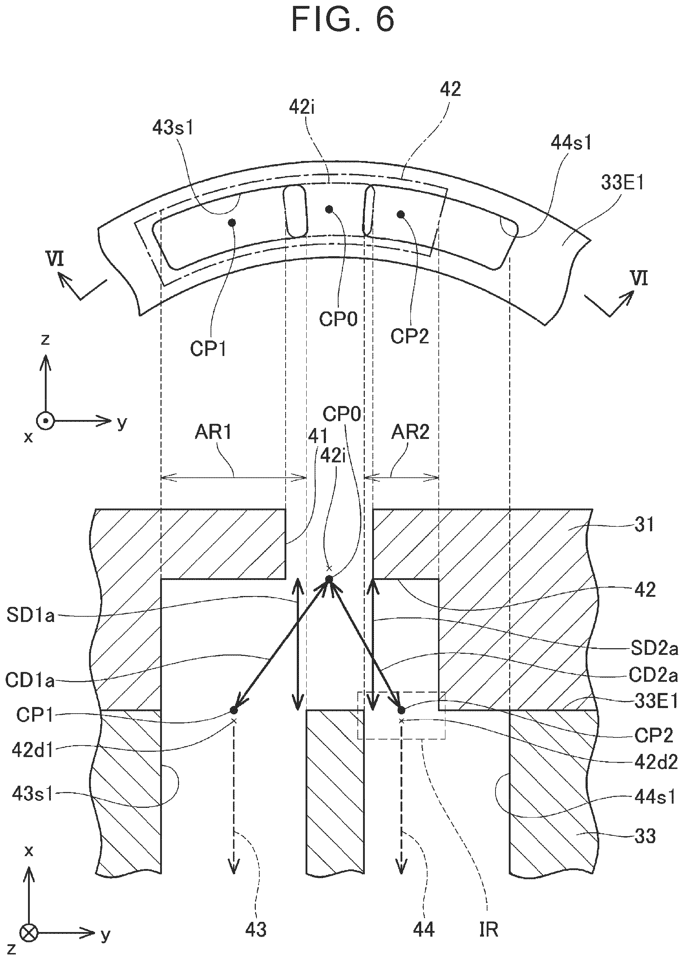

The second embodiment is different from the first embodiment in terms of the positional relation and the area relation among the inlet port 42i, the first outlet port 42d1, and the second outlet port 42d2. The same reference numerals are used to denote contents common with the first embodiment, and description thereof will be omitted. FIG. 6 is an enlarged view of a region in a vicinity of the branching passage 42 in the second embodiment. The range illustrated in FIG. 6 is the same as the range illustrated in FIG. 5 of the first embodiment.

In the second embodiment, the cross-sectional area of the straight portion 43s1 of the first channel 43 and the cross-sectional area of the straight portion 44s1 of the second channel 44 are the same. When the straight portion 43s1 is viewed from the x-axis direction, the entire opening area of the straight portion 43s1 is included in the opening region of the branching passage 42. Accordingly, area AR1 of the first outlet port 42d1 is equal to the cross-sectional area of the straight portion 43s1. On the other hand, when the straight portion 44s1 is viewed from the x-axis direction, only approximately half of the opening area of the straight portion 44s1 is included in the opening area of the branching passage 42 (see region IR). Accordingly, area AR2 of the second outlet port 42d2 is smaller than the cross-sectional area of the straight portion 44s1 and is also smaller than the area AR1 of the first outlet port 42d1.

The center CP0 of the inlet port 42i, the center CP1 of the first outlet port 42d1, and the center CP2 of the second outlet port 42d2, will now be considered, as viewed from the direction of the rotary shaft 11 (x direction) as illustrated in the plan view at the upper part of FIG. 6. As illustrated in the cross-sectional view at the lower part of FIG. 6, a distance CD1a between the center CP0 and the center CP1 is equal to a distance CD2a between the center CP0 and the center CP2.

Also, a shortest distance SD1a from the inlet port 42i to the first outlet port 42d1 and a shortest distance SD2 from the inlet port 42i to the second outlet port 42d2 will be considered, as illustrated in the cross-sectional view at the lower part of FIG. 6. The shortest distance SD1a and the shortest distance SD2a are equal.

As described above, in the second embodiment, in the relation among the inlet port 42i, the first outlet port 42d1, and the second outlet port 42d2, the area AR2 of the second outlet port 42d2 is smaller than the area AR1 of the first outlet port 4 2d 1. Thus, even when the distance CD1a is equal to the distance CD2a or when the shortest distance SD1a is equal to the shortest distance SD2a, the amount of pressure loss in the first channel 43 can be reduced. That is to say, setting the area relation between the first outlet port 42d1 and the second outlet port 42d2 as appropriate enables the flow rate distribution of the coolant to be adjusted such that the flow rate of the coolant in the first channel 43 is greater.

Although specific examples of the technology disclosed in the present specification have been described in detail above, these are merely exemplary and do not limit the scope of claims. The technology described in the claims includes various modifications and alterations of the specific examples illustrated above.

### Other Modifications

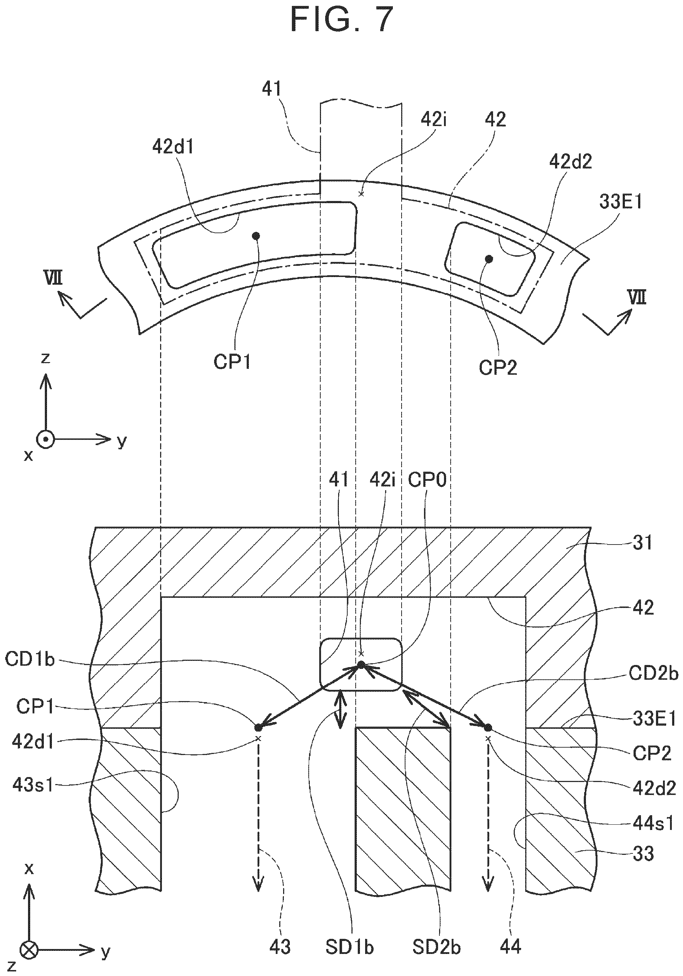

The positional relation among the inlet port 42i, the first outlet port 42d1, and the second outlet port 42d2 is not limited to the forms described in the present specification, and may take various forms. That is to say, a case is described in FIGS. 5 and 6 in which the direction in which the coolant flows in from the inlet port 42i and the direction in which the coolant flows out to the first outlet port 42d1 and the second outlet port 42d2 are all the x direction. However, this form is not restrictive. As illustrated in the example in FIG. 7, the inlet passage 41 may extend in the z direction, and the direction of the coolant flowing in from the inlet port 42i may be in the z direction. In this case as well, it is sufficient for a distance CD1b between the center CP0 of the inlet port 42i and the center CP1 of the first outlet port 42d1 to be smaller than a distance CD2b between the center CP0 and the center CP2 of the second outlet port 42d2. Alternatively, it is sufficient for a shortest distance SD1b from the inlet port 42i to the first outlet port 42d1 to be set so as to be shorter than a shortest distance SD2b from the inlet port 42i to the second outlet port 42d2. Thus, the flow rate distribution of the coolant can be adjusted such that the flow rate of the coolant in the first channel 43 becomes even greater.

The direction in which the straight portions 43s1 to 43s6 and the straight portions 44s1 to 43s4 extend is not limited to the direction parallel to the rotary shaft 11 (x-axis direction). For example, these may extend obliquely at an angle to the rotary shaft. Also, for example, a form may be made in which these extend in the circumferential direction about the rotary shaft 11.

Also, the technical elements described in the present specification or illustrated in the drawings exhibit technical utility alone or in various combinations, and are not limited to the combination described in the claims as filed. Also, the technology exemplified in the present specification or the drawings can achieve a plurality of objects at the same time, and has technical utility in itself by achieving one of the objects.

## Claims

1. A motor unit (1), comprising:
a motor (2);
a housing (30) that houses the motor (2); and
a coolant channel (40) that is provided in a wall face of the housing (30) and that is configured such that a coolant flows through, wherein
the coolant channel (40) includes
an inlet passage (41) for receiving the coolant from outside,
a branching passage (42) that is connected to the inlet passage (41) and into which the coolant flows from the inlet passage (41),
a first channel (43) that is connected to the branching passage (42) and into which the coolant flows from the branching passage (42),
a second channel (44) that is connected to the branching passage (42), into which the coolant flows from the branching passage (42), and also of which a path length is shorter than that of the first channel (43),
the first channel (43) and the second channel (44) are each structured such that a plurality of straight portions is connected in series by a plurality of bent portions, and
a cross-sectional area of the straight portions of the first channel (43) is larger than a cross-sectional area of the straight portions of the second channel (44).

2. The motor unit (1) according to claim 1, wherein the straight portions of the first channel (43) and the straight portions of the second channel (44) extend in a direction parallel to a rotary shaft of the motor (2).

3. The motor unit (1) according to claim 1, wherein
the coolant channel (40) includes a discharge port (46) for discharging the coolant from the first channel (43) and the second channel (44),
when viewed from a direction of a rotary shaft of the motor (2), a position of the inlet passage (41) and a position of the discharge port (46) are different in a circumferential direction of the housing (30),
the first channel (43) is provided in a first region in the circumferential direction of the housing (30), the first region extending from the inlet passage (41) toward one side in the circumferential direction to the discharge port (46), and
the second channel (44) is provided in a second region in the circumferential direction of the housing (30), the second region extending from the inlet passage (41) toward another side in the circumferential direction to the discharge port (46).

4. The motor unit (1) according to claim 1, wherein
the housing (30) includes
a body portion (33) with a cylindrical shape about a rotary shaft of the motor (2),
a first cover (31) that closes off a first end face of the body portion (33) on one side of the rotary shaft, and
a second cover (32) that closes off a second end face of the body portion (33) on another side of the rotary shaft,
the straight portions of the first channel (43) and the straight portions of the second channel (44) are fashioned in the body portion (33), and
the bent portions of the first channel (43) and the bent portions of the second channel (44) are fashioned in the first cover (31) and in the second cover (32).

5. The motor unit (1) according to claim 4, wherein the body portion (33) is a cast article.

6. The motor unit (1) according to claim 1, wherein a cross-sectional area of the bent portions of the first channel (43) is equal to a cross-sectional area of the bent portions of the second channel (44).
